# EUROPEAN PATENT SPECIFICATION

(11) **EP 3 006 313 B1**
(45) Date of publication and mention of the grant of the patent: **17.05.2017**
(21) Application number: 15189082.9
(22) Date of filing: 09.10.2015
(51) Int. Cl.: B62J 6/02, B60R 16/02, B62J 6/18, B62J 17/02

(54) **STRADDLED VEHICLE**
GRÄTSCHSITZ-FAHRZEUG
VÉHICULE DU TYPE MONTÉ À CALIFOURCHON

(30) Priority: 10.10.2014 JP 2014208933
(43) Date of publication of application: 13.04.2016
(73) Proprietor: Yamaha Hatsudoki Kabushiki Kaisha, Iwata-shi, Shizuoka 438-8501 (JP)
(72) Inventor: TAKARA, Kouji, Iwata-shi, Shizuoka 438-8501 (JP)
(74) Representative: Grünecker Patent- und Rechtsanwälte PartG mbB

(56) References cited:
- EP-A1- 2 447 143
- EP-A1- 2 712 793

## Description

The present invention relates to a straddled vehicle provided with an upper cowl.

The currently-used straddled vehicle, such as a motorcycle, includes a cowling on a front part and side parts of a vehicle body for reduction in air resistance during travelling. The cowling includes an upper cowling on the front part of the vehicle body, and a side cowling covering lateral parts of the straddled vehicle below the upper cowling. The upper cowling has a headlight unit attached thereto.

For instance, Japanese Patent No. 3679164B discloses a motorcycle having a headlight unit attached only to an upper cowling from rearward of the vehicle. An intake port for admission of outside air is disposed below the headlight unit, and a front wheel 3 is disposed below the intake port.

However, electrical components other than the headlight unit are accommodated within the upper cowling. Removal of the upper cowling having the headlight unit thereto from the vehicle body is required upon replacement of the electrical components. This yields an increased burden for users.

Accordingly, the Inventor has studied for enhanced maintenance by dividing the upper cowling. Specifically, the upper cowling was divided into a part having the headlight unit attached thereto and a part having no headlight unit attached thereto. The part of the upper cowling having no headlight unit attached thereto was removed for enhanced maintenance for the electrical components. Such an attempt was made.

However, even with the divided upper cowling, the headlight unit within the upper cowling caused limited arrangement flexibility of the electrical components in the upper cowling. As a result, it was difficult to match the divided configuration of the upper cowling to positions of the electrical components. This led to an impossibility of dynamically enhanced maintenance. Moreover, the upper cowling had to be removed from the vehicle body, and the headlight unit had to be removed from the upper cowling upon the maintenance for the headlight unit. Consequently, the maintenance for the headlight unit was complicated. Patent document EP 2 712 793 A1 discloses a straddled vehicle according to the preamble of independent claim 1. Patent document EP 2 447 143 A1 also refers to a straddled vehicle.

The present invention has been made regarding the state of the art noted above, and its one object is to provide a straddled vehicle that allows effective use of a space within an upper cowling and allows enhanced maintenance for a headlight unit. According to the present invention said object is solved by a straddled vehicle having the features of independent claim 1. Preferred embodiments are laid down in the dependent claims.

Aspect 1 of the present teaching provides a straddled vehicle. The straddled vehicle includes a head tube, a vehicle body frame extending rearward from the head tube, a duct disposed forward of the head tube, an upper cowling disposed forward of the duct, a headlight unit disposed below the upper cowling, a front wheel disposed below the headlight unit, and a harness connected to electrical components disposed forward of the head tube. The upper cowling includes a first upper cowling at least partially disposed laterally of the duct and attached to the duct, and a second upper cowling disposed above the duct and attached to the first upper cowling. The harness includes a main harness disposed adjacent to at least a first end of the vehicle body frame, and a sub harness branched from the main harness and connected to the electrical components. A part of the sub harness is connected to the electrical components disposed adjacent to a second end of the vehicle body frame through a space above the duct. The headlight unit is attached to a lower part of the first upper cowling laterally. With the above configuration, the headlight unit is disposed below the upper cowling, achieving a large space within the upper cowling. This obtains enhanced arrangement flexibility of the electrical components within the upper cowling, and obtains the increased number of electrical components to be disposed. Moreover, the upper cowling is dividable into the first upper cowling and the second upper cowling. The headlight unit is disposed below the first upper cowling. Accordingly, removing the second upper cowling allows ready access to the inside of the upper cowling. Moreover, the headlight unit can be attached to a lower part of the upper cowling laterally. Consequently, this allows ready attachment of the headlight unit without any interference of the front wheel in contrast to a situation where the headlight unit is attached from below of the upper cowling. This yields enhanced maintenance for the headlight unit.

Moreover, the currently-used main harness is branched rightward and leftward of the straddled vehicle to be connected to separate sub harnesses via couplers. The sub harnesses are connected to the electrical components forward of the vehicle body. In contrast to this, the present configuration obtains a space within the upper cowling through which the harness is inserted. Consequently, the sub harnesses can be disposed from one end to another end of the straddled vehicle. Accordingly, one main harness combined at one end of the straddled vehicle allows connection from an ECU to the electrical components forward of the vehicle. As a result, an entire length of the main harness can be decreased, achieving reduction in cost. Moreover, the sub harnesses are directly branched from the main harness, leading to reduction of the couplers. This yields reduction in number of components and reduction in cost. Moreover, a part of the sub harness is disposed from the one end to another end of the straddled vehicle through the space above the duct. This allows arrangement of the sub harnesses while the second upper cowling is removed upon assemble. In addition, merely removal of the second upper cowling upon maintenance achieves access to the sub harnesses.

Moreover, it is preferred that the electrical components includes a pair of right and left position lamps disposed external to the duct. A pair of right and left position lamps is disposed external to the duct. This yields arrangement of the sub harnesses to the position lamps in an upper space of the duct.

Moreover, the electrical components may include at least one selected from position lamps, a flasher, and a meter unit. The electrical components, including at least one selected from the position lamp, the flasher, and the meter unit, allow connection to the sub harnesses branched from the main harness.

Moreover, it is preferred that the headlight unit includes two headlights, a bar connecting the headlights, and projections projecting outward of the headlights individually in a vehicle width direction. It is preferred that the first upper cowling includes walls facing to each other in the vehicle width direction and extending downward, and the walls have holes in the vehicle width direction through which the projections are insertable individually.

The two headlights are connected via the bar. The headlights include the projections on the outside parts thereof. The projections are inserted into the holes in the walls of the first upper cowling, whereby the headlight unit is sandwiched with the first upper cowling and is temporarily fixed. This yields readily removal of the headlight unit from the first upper cowling using a bolt and the like.

It is preferred that the straddled vehicle further includes a cover covering the lower parts of the headlights. Covering the lower parts of the headlights with the cover yields protection of the headlights from collision due to bounced pebbles from a tire.

It is preferred that upper end faces of the headlights are each below an upper end of the duct. Since the upper end faces of the headlights are each below the upper end of the duct, a space can be produced between the upper end faces of the headlights and the upper end of the duct. This yields effective use of the space.

Moreover, it is preferred that the straddled vehicle further includes a side cowling covering an outer part of an attachment part of the headlight unit and the first upper cowling. The side cowling covers the outer part of the attachment part of the headlight unit and the first upper cowling. This yields protection of a connection between the headlight unit and a power connector from a battery.

It is preferred that the first upper cowling includes an intake port for admission of air The first upper cowling includes the intake port, yielding a maintained large space within the second upper cowling.

### Advantageous Effects of the Invention

The straddled vehicle according to the present teaching yields a large space within the upper cowling. This obtains enhanced arrangement flexibility of the electrical components within the upper cowling, and obtains the increased number of electrical components to be disposed. Moreover, the upper cowling is dividable into the first upper cowling and the second upper cowling. The headlight unit is disposed below the first upper cowling. Accordingly, removing the second upper cowling allows ready access within the upper cowling. Moreover, the headlight unit can be attached to a lower part of the upper cowling laterally. Consequently, this allows ready attachment of the headlight unit without any interference of the front wheel in contrast to a situation where the headlight unit is attached from below of the upper cowling. As a result, enhanced maintenance for the headlight unit is obtainable.

### Brief Description of Drawings

For the purpose of illustrating the present teaching, there are shown in the drawings several forms which are presently preferred, it being understood, however, that the present teaching is not limited to the precise arrangement and instrumentalities shown.
Figure 1 is a side view of a motorcycle according to one embodiment of the present teaching.
Figure 2 is a front view of the motorcycle according to the embodiment.
Figures 3 and 4 are perspective views each illustrating an upper cowling and peripheral members according to the embodiment.
Figure 5 is an exploded perspective view of the upper cowling and the peripheral members according to the embodiment.
Figure 6 is a top view of a main harness according to the embodiment.
Figure 7 is a perspective view of a main harness according to a conventional example of the present teaching.
Figure 8 is a plan view illustrating a first upper cowling from which a second upper cowling is removed and peripheral members of the first upper cowling.
Figure 9 is a front view illustrating the first upper cowling from which a second upper cowling is removed and peripheral members of the first upper cowling.
Figure 10 is a longitudinal sectional view of a duct and its peripheral members along a X-X line in Figure 2.
Figure 11 is a perspective view of a headlight unit according to the embodiment.
Figure 12 is a side view of the headlight unit attached to the first upper cowling according to the embodiment.
Figure 13 is a sectional view along a XIII-XIII line in Figure 12.
Figure 14 is a sectional view along a XIV-XIV line in Figure 12.

### Description of Embodiments

The following describes preferred embodiments of the present teaching with reference to drawings.

A sport-type motorcycle is to be described as one example of a straddled vehicle. Hereinunder, the terms forward/rearward and right/left are relative to a traveling direction of the motorcycle.

### 1. Outline Construction of Motorcycle

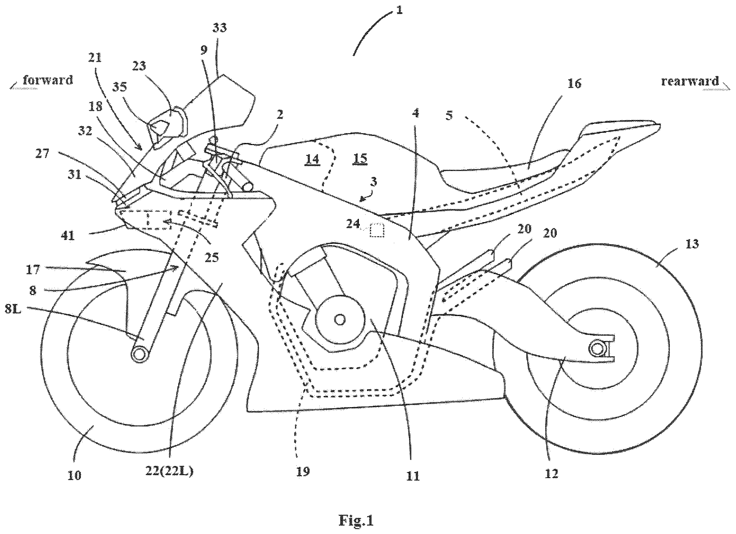

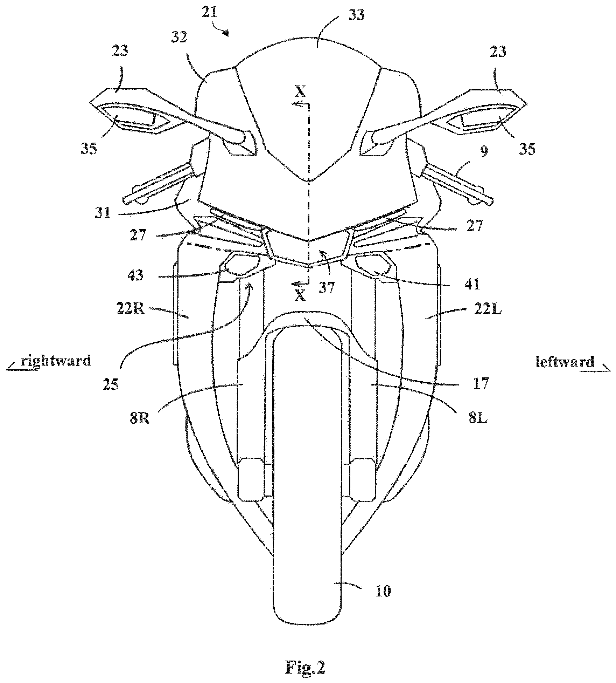

Reference is made to Figures 1 and 2. Figure 1 is a schematic side view of a motorcycle 1. Figure 2 is a schematic front view of the motorcycle 1. The motorcycle 1 includes a head tube 2 and a vehicle body frame 3. The head tube 2 is disposed in the middle of the vehicle in a vehicle width direction. The vehicle body frame 3 includes a main frame 4 and a seat frame 5. The main frame 4 is connected to the head tube 2, and is disposed rearward of the head tube 2. The seat frame 5 is connected to the main frame 4, and is disposed rearward of the main frame 4.

The head tube 2 supports a front fork 8 via a steering shaft, not show, such that the front fork 8 is swingable transversely. That is, the steering shaft fixed on the upper end of the front fork 8 is inserted into the head tube 2, whereby the front fork 8 is swingable transversely. A handle 9 is connected to an upper part of the steering shaft. Operating the handle 9 causes the front fork 8 to swing. The front fork 8 includes a left front fork 8L and a right front fork 8R. A front wheel 10 is rotatably attached to a lower end of the front fork 8. Moreover, a fender 17 covering the upper part of the front wheel 10 is fixed on the front fork 8.

An engine 11 is attached below the main frame 4. The main frame 4 supports a swing arm 12 rearward of the engine 11. The swing arm 12 holds a rear wheel 13. Moreover, an air cleaner box 14 is disposed on the main frame 4. A fuel tank 15 is supported on the main frame 4 rearward of the air cleaner box 14. The fuel tank 15 is disposed above the engine 11. A seat 16 is supported on the seat frame 5 rearward of the fuel tank 15. A duct unit 18 is connected forward of the head tube 2 and extends forward. Exhaust gas from the engine 11 passes through an exhaust pipe 19, and is discharged from a silencer 20.

The motorcycle 1 further includes an upper cowling 21, a side cowling 22, rear view mirrors 23, a headlight unit 25, and position lamps 27. The motorcycle 1 is a full cowling vehicle having the upper cowling 21 and the side cowling 22. The side cowling 22 includes a left side cowling 22L and a right side cowling 22R extending rearward of the upper cowling 21. The upper cowling 21 is disposed forward of the central axis of the head tube 2. The headlight unit 25 includes a left headlight 41 and a right headlight 43. The motorcycle 1 further includes an ECU 24 around the middle of the vehicle.

### 2. Configuration of Upper Cowling

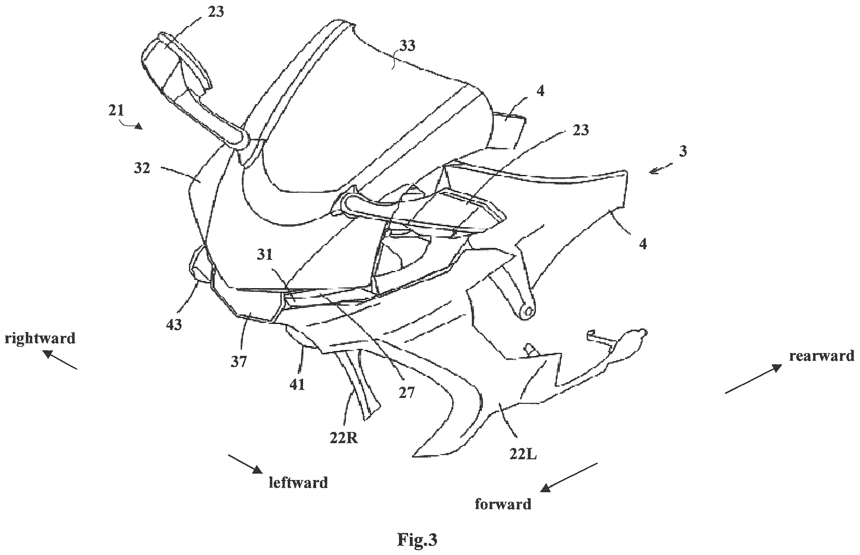

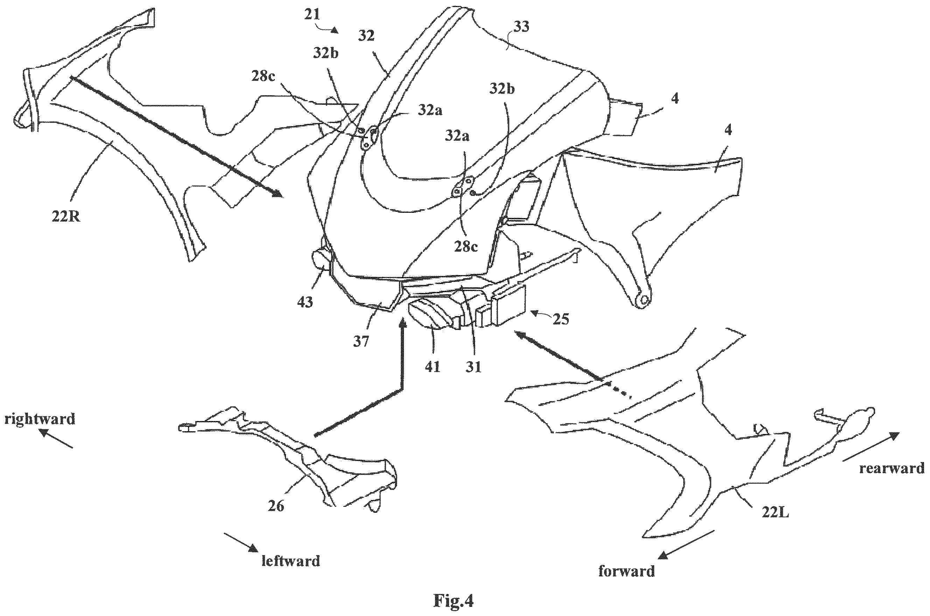

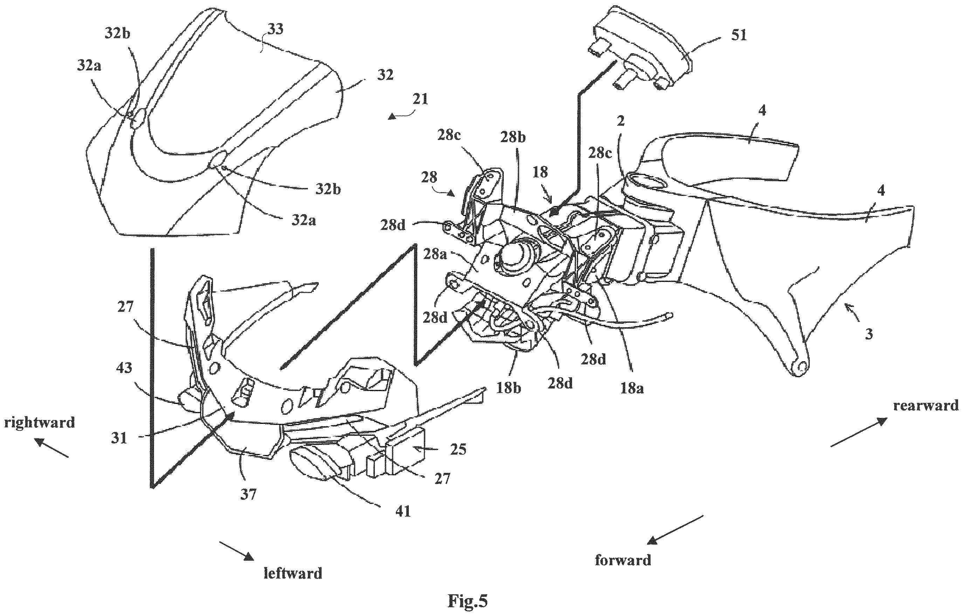

The following describes a configuration of the upper cowling in the motorcycle 1 with reference to Figures 3 to 5. Figure 3 is a perspective view of the upper cowling and its peripheral members. Figure 4 is a perspective view of the upper cowling and its peripheral members when the side cowling is removed. Figure 5 is an exploded perspective view of the upper cowling and its peripheral members.

The upper cowling 21 includes a first upper cowling 31 and a second upper cowling 32. The upper cowling 21 is dividable vertically into the first upper cowling 31 and the second upper cowling 32. The second upper cowling 32 is connected to an upper part of the first upper cowling 31. The second upper cowling 32 and the first upper cowling 31 are removable vertically. This allows access in any of right and left directions, yielding enhanced maintenance.

The first upper cowling 31 includes an intake port 37 in the middle thereof. Air sucked from the intake port 37 is introduced through the duct unit 18 and the cleaner box 14 into the engine 11. A pair of right and left position lamps 27 is attached to the first upper cowling 31 outside of the intake port 37. That is, the position lamps 27 are disposed external to the duct main body 18a. Moreover, the first upper cowling 31 is at least partially disposed on a side of the duct main body 18a of the duct unit 18.

The headlight unit 25 is attached to a lower side part of the first upper cowling 31. That is, the headlight unit 25 is disposed below the upper cowling 21. The headlight unit 25 illuminates an area forward of the straddled vehicle 1.

The second upper cowling 32 includes a windbreak screen 33 at the center in the vehicle width direction. The rear view mirrors 23 are each attached to a holder plate 28c of the duct unit 18 across a hole 32a of the second upper cowling 32. Accordingly, the second upper cowling 32 is also fixed on the holder plate 28c. Flashers 35 are provided on front parts of the right and left rear view mirrors 23 individually. See Figure 1. The flashers 35 each emit flashing light to give information about turning over of the straddled vehicle 1 to the surroundings of the straddled vehicle 1. Lead wires connected to the flashers 35 are connected to a harness via the holes 32b in the second upper cowling 32.

The left side cowling 22L and the right side cowling 22R are attached to the first upper cowling 31. When the left side cowling 22L and the right side cowling 22R are removed from the first upper cowling 31 (see Figure 4), an outer part of the headlight unit 25 is exposed. That is, the side cowling 22 covers an outer attachment part of the headlight unit 25 and the first upper cowling 31.

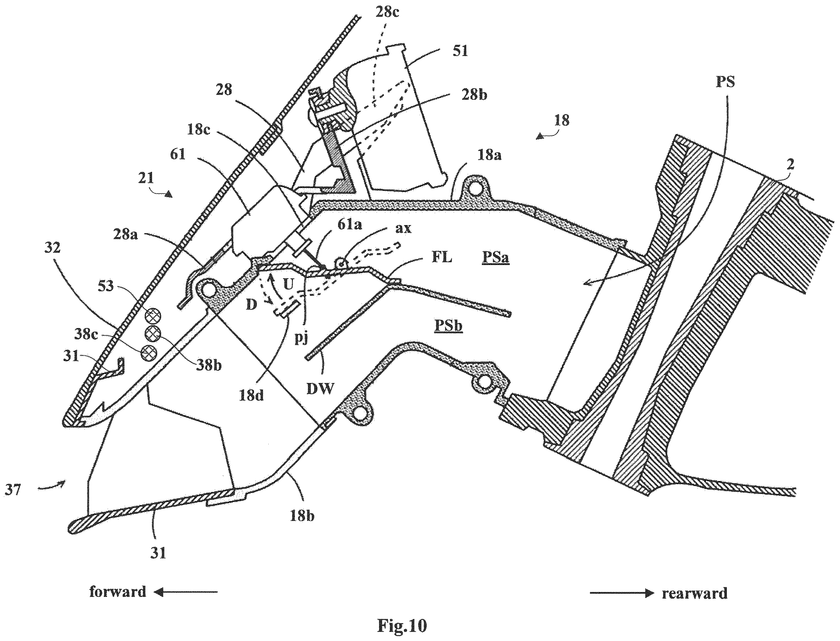

The following describes a configuration of the duct unit 18 with reference to Figures 5 and 10. Figure 10 is a longitudinal sectional view of the duct and its peripheral members. The duct unit 18 includes a duct main body 18a, a duct front end 18b, and a stay 28. The duct main body 18a is a rectangular cylindrical member. The duct main body 18a extends diagonally upward from rearward and then extends diagonally downward. The duct front end 18b is attached to a front end of the duct main body 18a. The duct main body 18a is, for example, made of glass fiber reinforced resin.

The duct front end 18b is a rectangle cylinder. The duct front end 18b extends diagonally downward from a connection to the duct main body 18a. The duct front end 18b is, for example, made of rubber. The duct main body 18a and the duct front end 18b each include an interior space functioning as an intake path PS for sucking air into the air cleaner box 14.

The stay 28 includes a duct attachment part 28a, a meter stay 28b, support boards 28c, and support boards 28d. The stay 28 is, for example, made of glass fiber reinforced resin.

The duct attachment part 28a is attached to a top face of the duct main body 18a. The meter stay 28b projects upward from a rear end of the duct attachment part 28a. The support boards 28c are disposed on both sides of the meter stay 28b. The support boards 28c each hold the rear view mirror 23. The first upper cowling 31 is fixed on the support boards 28d of the duct unit 18. That is, the first upper cowling 31 is attached to the duct main body 18a via the stay 28.

A meter unit 51 is attached to the meter stay 28b. The meter unit 51 indicates information about the straddled vehicle 1, such as velocities of the straddled vehicle 1, to a rider. The upper cowling 21 includes a space therein enclosed with the meter stay 28b, the second upper cowling 32, and the first upper cowling 31.

The intake port 37 is provided in the first upper cowling 31, and the headlight unit 25 is attached to the lower part of the first upper cowling 31. This yields a larger space within the upper cowling 21. Especially, a large space between the second upper cowling 32 and the duct 18 is ensured, achieving insertion of the harness into the space within the upper cowling 21.

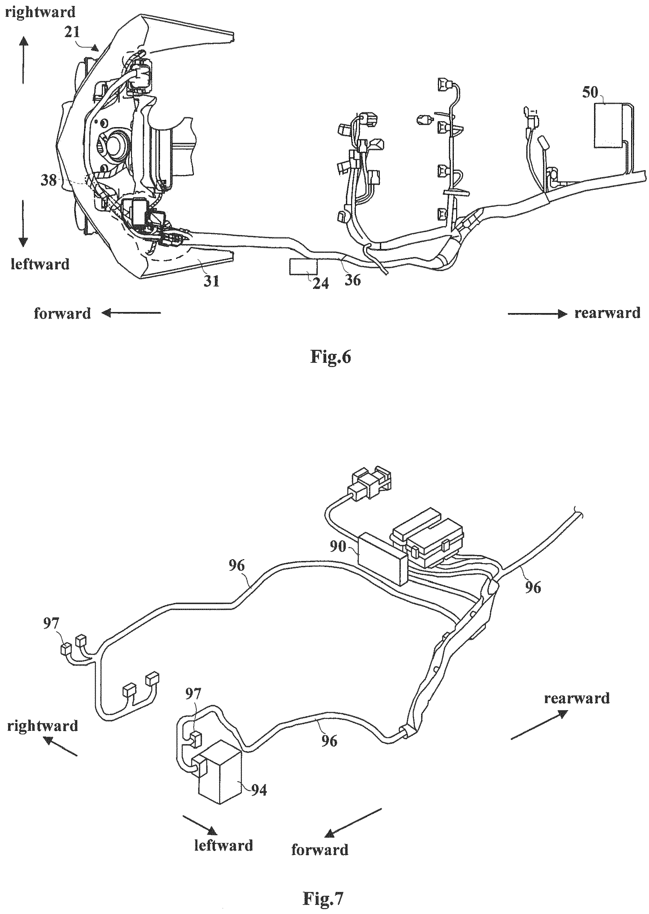

Reference is now made to Figures 6 and 7. Figure 6 is a top view of the main harness. Figure 7 is a perspective view of the currently-used main harness.

As illustrated in Figure 6, the main harness 36 connected to the ECU 24 and the battery 50 extends forward along the left side of the motorcycle 1. The main harness 36 has a trunk formed on the left side of the motorcycle 1, and is branched rightward of the trunk. In contrast to this, as illustrated in Figure 7, the currently-used main harness 96 is connected to a battery 90 at the center, and is branched forward and rightward. A part of the main harness 96 branched rightward extends further forward, and is connected to an electrical component disposed a rightward and forward part of the motorcycle via a coupler 97 and another sub harness. In addition, one part of the main harness 96 branched forward at the center is connected to an ECU 94, and the other part is connected to an electrical component disposed a leftward and forward part of the motorcycle via a coupler 97 and another sub harness. In this manner, two main harnesses 96 are formed conventionally that extend forward.

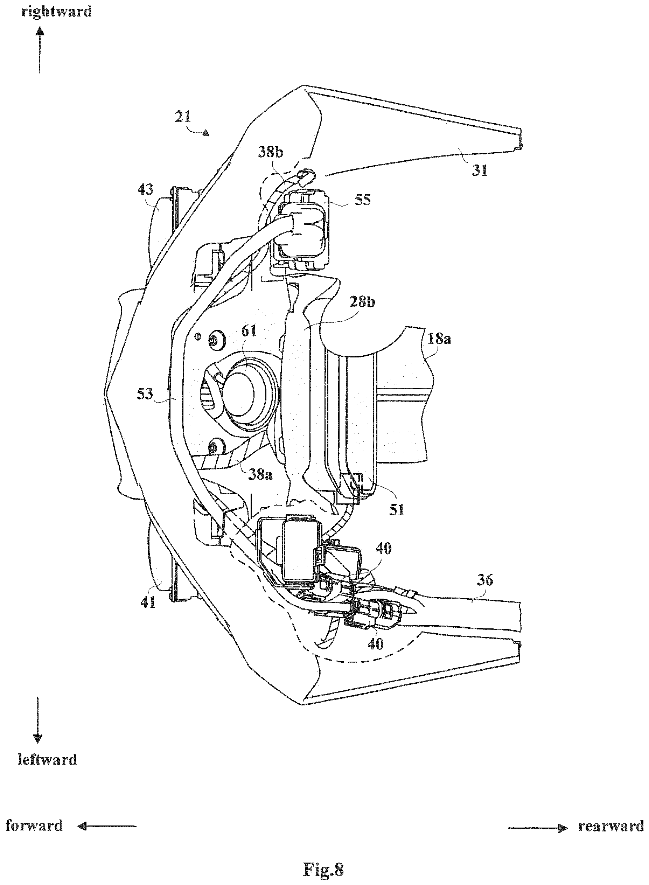

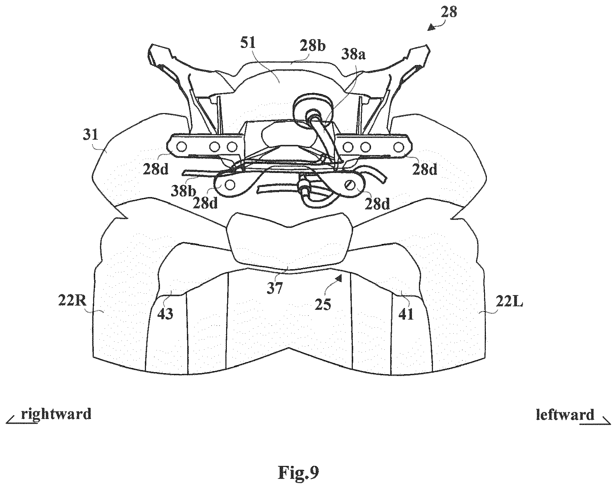

With the present embodiment, the main harness 36 is branched into a sub harness 38 within the upper cowling 21. Consequently, only one main harness 36 is required to be disposed on the right or left side of the motorcycle 1. This allows a shorter overall length of the main harness 36 than the currently-used harness, yielding cost reduction. Reference is next made to Figures 8 to 10. Figure 8 is a plan view of the second upper cowling from which the first upper cowling is removed and its peripheral members. Figure 9 is a front view of the second upper cowling from which the first upper cowling is removed and its peripheral members.

The main harness 36 is directly branched into a plurality of sub harnesses 38a, 38b, and 38c within the upper cowling 21. That is, the sub harnesses 38a, and 38b, and 38c are not connected to the main harness 36 via couplers, which differs from the conventional example. Hereinunder, the sub harnesses 38a, 38b, and 38c are generically referred to as the sub harness 38. The sub harness 38a is connected to the meter unit 51. The sub harness 38b is connected to the flasher 35.

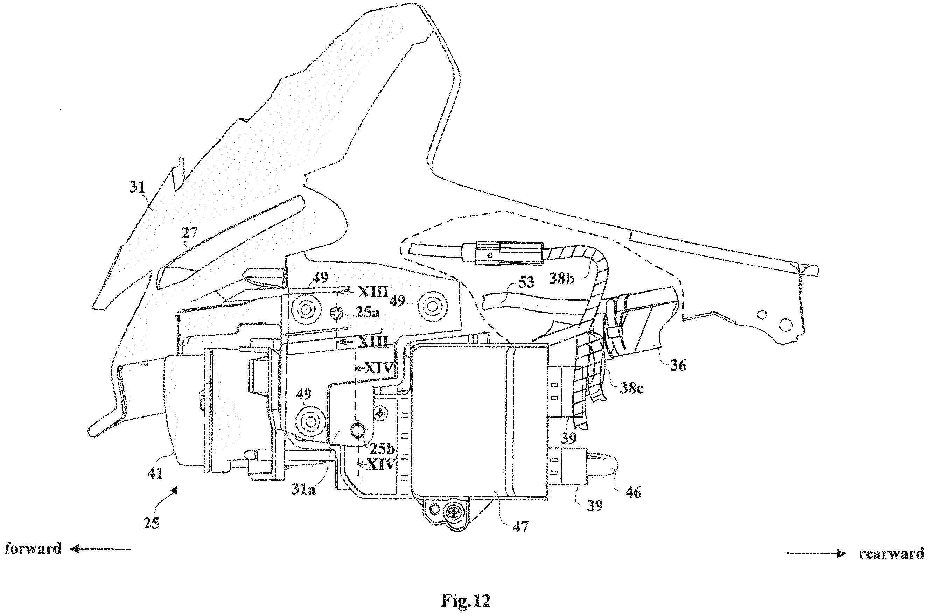

The sub harness 38c is connected to a driver 47 of the headlight unit 25 via a connector 39. See Figure 12. As noted above, the sub harnesses 38a, 38b, and 38c can be connected from one side of the vehicle body frame 3 to the electrical components on the other side within in the upper cowling 21 through the duct front end 18b, i.e., through an upper part of the duct unit 18. Such a configuration needs no separate sub harness. Consequently, a coupler for connecting to the main harness 36 can be eliminated, yielding reduction in cost for harnesses. Moreover, it is possible to incorporate the electrical components before connecting the sub harness 38 to the electrical component within the upper cowling 21.

Alternatively, as in the conventional example, another separate sub harness 53 may be used in combination that is connected to an electrical component via the coupler 40. It is useful to connect an optionally provided electrical component to the main harness 36. In the present embodiment, a suspension control system (hereinunder, referred to as an SCU) 55 corresponds to the electrical component optionally provided. The sub harness 53 connected to the main harness 36 via the coupler 40 is connected throughout the upper cowling 21 from the left to the right to the SCU 55. The coupler 40 faces to the SCU 55 across the meter unit 51.

In addition, passing the sub harness 38 through the upper cowling 21 allows prevention of contact of the sub harness 38 to a movable part such as the front fork 8 and the handle 9. Accordingly, cut off of the sub harness 38 is avoidable. Moreover, there is no need to provide the sub harness 38 temporarily on the main frame 4 for going around the movable part. This achieves a shorter sub harness 38.

The following describes an inside of the duct main body 18a with reference to Figure 10. As illustrated in Figure 10, the duct main body 18a includes a division wall DW in its interior space. The duct main body 18a includes inside thereof two intake passages, i.e., an upper passage PSa as an upper intake passage and a lower passage PSb as a lower intake passage, both the passages being divided by the division wall DW.

The duct main body 18a includes inside thereof a flap FL. A rotary shaft ax projecting in the width direction is formed at the center of the flap FL. This causes the flap FL to be rotatably supported with the rotary shaft ax within the upper passage PSa. Rotation of the flap FL in one direction causes the upper passage PSa to open. Rotation of the flap FL in the opposite direction causes the upper passage PSa to close. The flap FL has a projection pj formed thereon forward of the rotary shaft ax.

A flap open/close apparatus 61 is disposed on the front face of the duct main body 18a for covering an opening 18c. The flap open/close apparatus 61 is a cylindrical actuator.

The flap open/close apparatus 61 includes a suction chamber, a diaphragm, and a coupling member 61a. In the flap open/close apparatus 61, pressure within the suction chamber varies, whereby the diaphragm deforms and correspondingly the coupling member 61 a actuates in response to deformation of the diaphragm. This causes the flap FL to rotate, whereby the upper passage PSa opens and closes.

The coupling member 61 a of the flap open/close apparatus 61 is a metal rod. The coupling member 61 a extends diagonally downward from the opening 18c in the front top face of the duct main body 18a, and is connected to the projection pj of the flap FL. In the flap open/close apparatus 61, pressure within the suction chamber, not shown, varies from negative pressure to atmospheric pressure, whereby the coupling member 61a is pressed diagonally downward. In this case, the flap FL rotates in a direction denoted by a dotted line arrow D, whereby a part of the flap FL adjacent to the front end contacts a rotation blocking part 18d. This blocks rotation of the flap FL in one direction while the flap FL is substantially parallel to the front part of the division wall DW. Under such a condition, the upper passage PSa is opened.

On the other hand, in the present flap open/close apparatus 61, pressure within the suction chamber, not shown, varies from atmospheric pressure to negative pressure, whereby the coupling member 61 a is pressed diagonally upward. In this case, the flap FL rotates in a direction denoted by a solid line arrow U, whereby a front end of the flap FL contacts the front top face of the duct main body 18a and a rear end of the flap FL contacts the division wall DW. This blocks rotation of the flap FL in the opposite direction, and thus the upper passage PSa is closed.

In the present embodiment, when a traveling velocity of the motorcycle 1 or a rotation speed of the engine 3 exceeds a specific threshold, the flap FL within the duct main body 18a rotates in one direction to open the upper passage PSa. In this case, air flowing from the intake port 37 to the intake passage PS is supplied through the upper passage PSa and the lower passage PSb to the engine 3. This yields a high supercharging effect.

When the traveling velocity of the motorcycle 1 or the rotation speed of the engine 3 is equal to or less than the specific threshold, the flap FL within the duct main body 18a rotates in the opposite direction to close the upper passage PSa. In this case, air flowing from the intake port 37 to the intake passage PS is supplied through the lower passage PSb to the engine 3. This yields a supercharging effect and reduction in noise escaping externally from the engine 3 through the intake passage PS. In addition, the second upper cowling 32 is removed from the first upper cowling 31, yielding ready access to the flap open/close apparatus 61 and easy maintenance.

### 3. Configuration of Headlight Unit

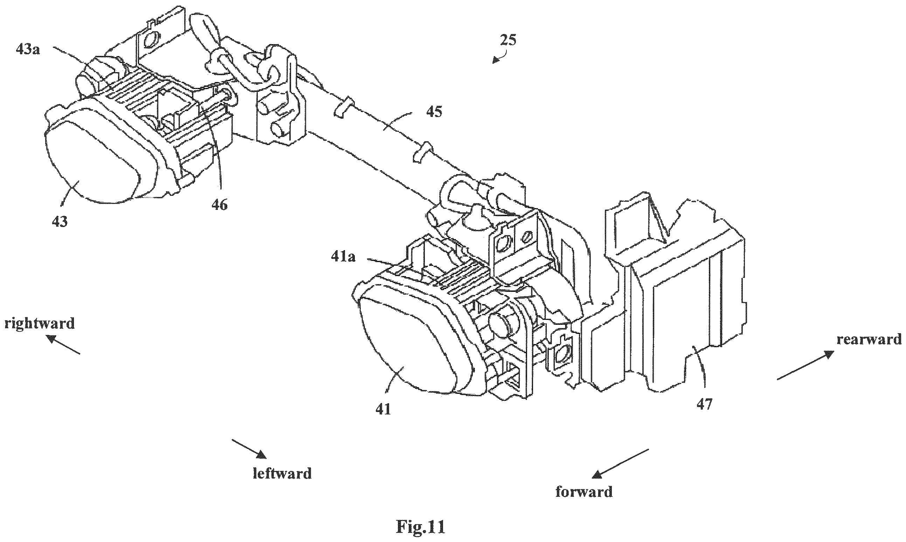

The following describes a configuration of the headlight unit with reference to Figures 11 and 12. Figure 11 is a perspective view of the headlight unit. Figure 12 is a side view of the headlight unit attached to the second upper cowling.

The headlight unit 25 includes a bar 45 connecting the left headlight 41 and the right headlight 43, and a driver 47 driving the left headlight 41 and the right headlight 43. A battery 50 supplies power to the driver 47. The left headlight 41 and the right headlight 43 are integrated via the bar 45. Consequently, the one driver 47 can drive the two headlights 41 and 43. Heat sink 41 a and 43a are disposed rearward of the left and right headlights 41 and 43, respectively. A lead wire 46 is connected from the driver 47 to the left and right headlight 41 and 43 via the connector 39 for supplying power.

The headlight cover 26 covers the lower parts of the left headlight 41 and the right headlight 43 of the headlight unit 25. See Figure 4. This allows protect of the left headlight 41 and the right headlight 43 from collision due to bounced pebbles from the front wheel 10 below the headlight unit 25.

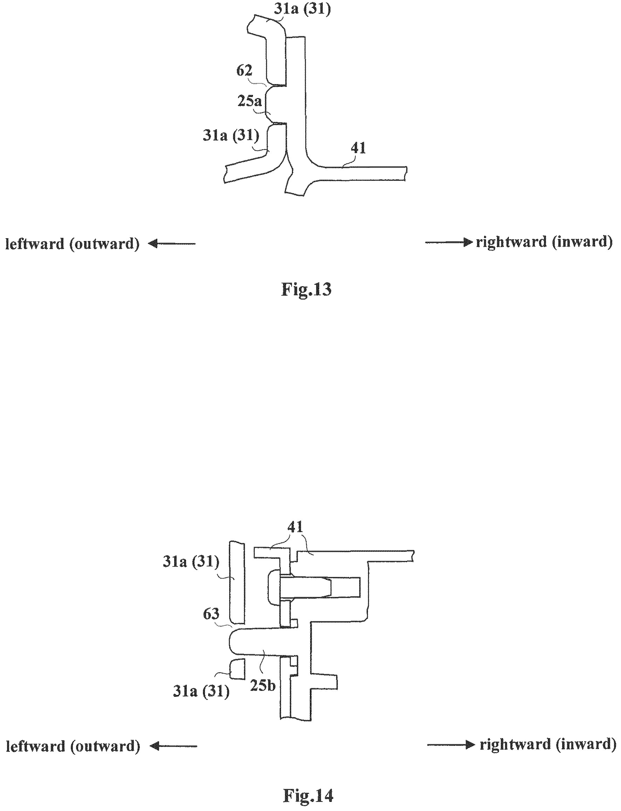

The first upper cowling 31 includes walls 31 a facing to each other in the vehicle width direction and extend downward. The headlight unit 25 is fixed on the walls 31 a of the first upper cowling 31 via bolts 49. Moreover, the walls 31 a each have holes 62 and 63 (see Figures 13 and 14) passing through in the vehicle width direction.

Moreover, the headlight unit 25 includes projection 25a and 25b extending symmetrically in the vehicle width direction on the outer side of the left headlight 41 and the right headlight 43. The projections 25a and 25b are inserted into the holes 61 and 63 in the walls 31 a from the inside of the walls 31 a. See Figures 13 and 14. An elastic force of the first upper cowling 31 causes the first upper cowling 31 to presses the both sides of the headlight unit 25. Consequently, the headlight unit 25 is fixed temporarily while the bolts 49 are not fixed.

The headlight unit 25 is connected to the outside part of the upper cowling 21.

Consequently, the headlight unit 25 can be replaced without removing the upper cowling 21 from the duct unit 18. Moreover, the headlight unit 25 is connectable and detachable laterally below the upper cowling 21 by merely connecting and detaching the connector 39 (see Figure 12) without removing the side cowling 22. Consequently, the headlight unit 25 can be attached easily with no interference to the front wheel 10 in contrast to a situation where the headlight unit 25 is attached from below the upper cowling 21. This yields enhanced maintenance for the headlight unit 25.

With the present embodiment, the headlight unit 25 is disposed below the upper cowling 21, achieving a large space within the upper cowling 21. This yields enhanced arrangement flexibility of the electrical components within in the upper cowling 21, and thus yields an increased number of electrical components to be disposed.

Moreover, the upper cowling 21 is dividable into the second upper cowling 32 and the first upper cowling 31. The headlight unit 25 is disposed below the first upper cowling 31. Accordingly, removing the second upper cowling 32 allows ready access within the upper cowling 21.

Moreover, the currently-used main harness accommodated in the upper cowling 21 is connected to the electrical components in the forward part of the vehicle via the separate sub harness and the couplers. Using the present configuration yields connection from the ECU 24 to the electrical components forward of the head tube 2 by arranging the sub harness from the main harness 36 disposed on one end of the motorcycle 1 to the other end through the upper cowling 21. This yields reduction in length of the main harness 36. As a result, reduction in cost of the harness is obtainable. Moreover, the two lights, i.e., the left headlight 41 and the right headlight 43 are connected via the bar 45. The headlights 41 and 43 include the projections 25a and 25b on their outer side faces, respectively. The projection 25a and 25b are inserted into the holes 61 and 63 in the walls 31 a of the first upper cowling 31. Consequently, the headlight unit 25 can be temporarily fixed and held by the first upper cowling 31. This facilitates connection and detachment of the headlight unit 25 to the first upper cowling 31 via the bolts 49.

Moreover, the side cowling 22 covers the outer side of the attachment part of the headlight unit 25 and the first upper cowling 31. This allows protection of the headlight unit 25 and the driver 47 as a power connector from the battery 50. Moreover, the first upper cowling 31 includes the intake port 37. This yields a large space within the second upper cowling 32. Moreover, an upper end face of the headlight unit 25 is below an upper end of the duct 18. In other words, the upper end faces of the headlight 41 and 43 are below the upper end of the duct main body 18a. This yields a space between the upper end faces of the headlights 41 and 43 and the upper end of the duct main body 18a. The flap open/close apparatus 61 and the like can be disposed within the space. The present teaching is not limited to the above embodiments, but may be modified as under.
(1) In the embodiments mentioned above, the motorcycle 1 having a single front wheel 10 and a single rear wheel 13 has been described as one example of the straddled vehicle. However, this is not limitative. For instance, the motorcycle 1 may be modified to a three-wheeled vehicle having two front wheels or two rear wheels. Alternatively, the motorcycle 1 may be modified to a four-wheeled vehicle having two front wheels and two rear wheels. In such modifications, the front fork 8 may be selected or changed as appropriately.
(2) In the embodiments mentioned above, the motorcycle 1 includes the engine 11 as a power source. However, this is not limitative. For instance, the embodiments may be modified having an electric motor as the power source.
(3) In the embodiments mentioned above, the motorcycle 1 with the SCU 55 has been described. However, this is not limitative. That is, the motorcycle 1 with no SCU 55 is adoptable.

## Claims

1. A straddled vehicle (1), comprising: a head tube (2);
a vehicle body frame (3) extending rearward from the head tube (2);
a duct (18) disposed forward of the head tube (2);
an upper cowling (21) disposed forward of the duct (18);
a headlight unit (25) disposed below the upper cowling (21);
a front wheel (10) disposed below the headlight unit (25); and
a harness connected to electrical components disposed forward of the head tube (2), wherein
the upper cowling (21) comprises:
a first upper cowling (31) at least partially disposed laterally of the duct (18) and attached to the duct (18); and
a second upper cowling (32) disposed above the duct (18) and attached to the first upper cowling (31),
the harness comprises:
a main harness (36) disposed adjacent to at least a first end of the vehicle body frame (3); and
a sub harness (38),
the straddled vehicle (1) being **characterized in that**
the sub harness (38) is branched from the main harness (36) and connected to the electrical components, a part (38a, 38b, 38c) of the sub harness (38) is connected to the electrical components disposed adjacent to a second end of the vehicle body frame (3) through a space above the duct (18), and
the headlight unit (25) is attached to a lower part of the first upper cowling (31) laterally.

2. The straddled vehicle (1) according to claim 1, wherein
the electrical components comprise a pair of right and left position lamps (27) disposed external to the duct (18).

3. The straddled vehicle (1) according to any one of claims 1 to 2, wherein
the electrical components comprise at least one selected from position lamps (27), a flasher (35), and a meter unit (51).

4. The straddled vehicle (1) according to any one of claims 1 to 3, wherein
the headlight unit (25) comprises two headlights (41, 43), a bar (45) connecting the headlights (41, 43), and projections (25a, 25b) projecting outward of the headlights (41, 43) individually in a vehicle width direction, and
the first upper cowling (31) comprises walls (31 a) facing to each other in the vehicle width direction and extending downward, the walls (31 a) having holes in the vehicle width direction through which the projections (25a, 25b) are insertable individually.

5. The straddled vehicle (1) according to claim 4, further comprising:
a cover (26) covering the lower parts of the headlights (41, 43).

6. The straddled vehicle (1) according to claim 4 or 5, wherein
upper end faces of the headlights (41, 43) are each below an upper end of the duct (18).

7. The straddled vehicle (1) according to any one of claims 1 to 6, further comprising:
a side cowling (22) covering an outer part of an attachment part of the headlight unit (25) and the first upper cowling (31).

8. The straddled vehicle (1) according to any one of claims 1 to 7, wherein the first upper cowling (31) comprises an intake port (37) for admission of air.

## Patentansprüche

1. Spreizsitz-Fahrzeug (1), das umfasst:
ein Steuerrohr (2);
einen Fahrzeugkarosserie-Rahmen (3), der sich von dem Steuerrohr (2) nach hinten erstreckt;
einen Kanal (18), der vor dem Steuerrohr (2) angeordnet ist;
eine obere Verkleidung (21), die vor dem Kanal (18) angeordnet ist;
eine Scheinwerfer-Einheit (25), die unterhalb der oberen Verkleidung (18) angeordnet ist;
ein Vorderrad (10), das unterhalb der Scheinwerfer-Einheit (25) angeordnet ist; und
einen Kabelbaum, der mit elektrischen Komponenten verbunden ist, die vor dem Steuerrohr (2) angeordnet sind,
wobei
die obere Verkleidung (21) umfasst:
eine erste obere Verkleidung (31), die wenigstens teilweise seitlich von dem Kanal (18) angeordnet und an dem Kanal (18) angebracht ist; sowie
eine zweite obere Verkleidung (32), die oberhalb des Kanals (18) angeordnet und an der ersten oberen Verkleidung (31) angebracht ist,
der Kabelbaum umfasst:
einen Haupt-Kabelbaum (36), der an wenigstens ein erstes Ende des Fahrzeugkarosserie-Rahmens (3) angrenzend angeordnet ist; sowie
einen Neben-Kabelbaum (38),
und das Spreizsitz-Fahrzeug (1) **dadurch gekennzeichnet ist, dass** der Neben-Kabelbaum (38) von dem Haupt-Kabelbaum (36) abzweigt und mit den elektrischen Komponenten verbunden ist,
ein Teil (38a, 38b, 38c) des Neben-Kabelbaums (38) mit den elektrischen Komponenten, die an ein zweites Ende des Fahrzeugkarosserie-Rahmens (3) angrenzend angeordnet sind, über einen Raum oberhalb des Kanals (18) verbunden ist, und
die Scheinwerfer-Einheit (25) seitlich an einem unteren Teil der ersten oberen Verkleidung (31) angebracht ist.

2. Spreizsitz-Fahrzeug (1) nach Anspruch 1, wobei
die elektrischen Komponenten ein Paar aus einer rechten und einer linken Positionsleuchte (27) umfassen, die außerhalb des Kanals (18) angeordnet sind.

3. Spreizsitz-Fahrzeug (1) nach einem der Ansprüche 1 bis 2, wobei
die elektrischen Komponenten wenigstens eine Komponente umfassen, die aus Positionsleuchten (27), einem Blinker (35) und einer Instrumenten-Einheit (51) ausgewählt wird.

4. Spreizsitz-Fahrzeug (1) nach einem der Ansprüche 1 bis 3, wobei
die Scheinwerfer-Einheit (25) zwei Scheinwerfer (41, 43), eine Schiene (45), die die Scheinwerfer (41, 43) verbindet, sowie Vorsprünge (25a, 25b) umfasst, die von den Scheinwerfern (41, 43) einzeln in einer Fahrzeug-Breitenrichtung nach außen vorstehen, und
die erste obere Verkleidung (31) Wände (31a) umfasst, die einander in der Fahrzeug-Breitenrichtung zugewandt sind und sich nach unten erstrecken, wobei die Wände (31 a) Löcher in der Fahrzeug-Breitenrichtung aufweisen, über die die Vorsprünge (25a, 25b) einzeln eingeführt werden können.

5. Spreizsitz-Fahrzeug (1) nach Anspruch 4, das des Weiteren umfasst:
eine Abdeckung (26), die die unteren Teile der Scheinwerfer (41, 43) abdeckt.

6. Spreizsitz-Fahrzeug (1) nach Anspruch 4 oder 5, wobei
obere Endflächen der Scheinwerfer (41, 43) sich jeweils unterhalb eines oberen Endes des Kanals (18) befinden.

7. Spreizsitz-Fahrzeug (1) nach einem der Ansprüche 1 bis 6, das des Weiteren umfasst:
eine seitliche Verkleidung (22), die einen äußeren Teil eines Anbringungsteils der Scheinwerfer-Einheit (25) und der ersten oberen Verkleidung (31) abdeckt.

8. Spreizsitz-Fahrzeug (1) nach einem der Ansprüche 1 bis 7, wobei
die erste obere Verkleidung (31) eine Einlassöffnung (37) zum Einlassen von Luft umfasst.

## Revendications

1. Véhicule à enfourcher (1) comprenant :
un tube de tête (2) ;
un châssis de corps de véhicule (3) qui s'étend vers l'arrière depuis le tube de tête (2) ;
un conduit (18) agencé à l'avant du tube de tête (2) ;
un capot supérieur (21) agencé à l'avant du conduit (18) ;
une unité de phare (25) agencée en dessous du capot supérieur (21) ;
une roue avant (10) agencée en dessous de l'unité de phare (25) ; et
un faisceau de câblage connecté à des composants électriques agencés à l'avant du tube de tête (2),
dans lequel le capot supérieur (21) comprend :
un premier capot supérieur (31) au moins partiellement agencé latéralement par rapport au conduit (18) et attaché au conduit (18) ; et
un deuxième capot supérieur (32) agencé au-dessus du conduit (18) et attaché au premier capot supérieur (31),
le faisceau de câblage comprenant :
un faisceau de câblage principal (36) agencé de manière adjacente à au moins une première extrémité du châssis de corps de véhicule (3) ; et
un sous-faisceau de câblage (38),
le véhicule à enfourcher (1) étant **caractérisé en ce que**
le sous-faisceau de câblage (38) est branché à partir du faisceau de câblage principal (36) et connecté aux composants électriques,
une partie (38a, 38b, 38c) du sous-faisceau de câblage (38) est connectée aux composants électriques agencés de manière adjacente à une deuxième extrémité du châssis de corps de véhicule (3) à travers un espace au-dessus du conduit (18), et
l'unité de phare (25) est attachée latéralement à une partie inférieure du premier capot supérieur (31).

2. Véhicule à enfourcher (1) selon la revendication 1, dans lequel
les composants électriques comprennent une paire de feux de position droit et gauche (27) agencés à l'extérieur du conduit (18).

3. Véhicule à enfourcher (1) selon l'une quelconque des revendications 1 et 2, dans lequel
les composants électriques comprennent au moins un élément sélectionné parmi les feux de position (27), un clignotant (35) et une unité de compteur (51).

4. Véhicule à enfourcher (1) selon l'une quelconque des revendications 1 à 3, dans lequel
l'unité de phare (25) comprend deux phares (41, 43), une barre (45) qui connecte les phares (41, 43), et des projections (25a, 25b) qui se projettent individuellement vers l'extérieur des phares (41, 43) en direction de la largeur du véhicule, et
le premier capot supérieur (31) comprend des parois (31a) qui se font face en direction de la largeur du véhicule et s'étendent vers le bas, les parois (31a) comportant des trous en direction de la largeur du véhicule à travers lesquels les projections (25a, 25b) peuvent être insérées individuellement.

5. Véhicule à enfourcher (1) selon la revendication 4, comprenant en outre :
un couvercle (26) qui recouvre les parties inférieures des phares (41, 43).

6. Véhicule à enfourcher (1) selon la revendication 4 ou 5, dans lequel
des faces d'extrémité supérieure des phares (41, 43) sont chacune en dessous d'une extrémité supérieure du conduit (18).

7. Véhicule à enfourcher (1) selon l'une quelconque des revendications 1 à 6, comprenant en outre :
un capot latéral (22) recouvrant une partie externe d'une partie d'attachement de l'unité de phare (25) et le premier capot supérieur (31).

8. Véhicule à enfourcher (1) selon l'une quelconque des revendications 1 à 7, dans lequel
le premier capot supérieur (31) comprend un orifice d'admission (37) pour l'admission d'air.
